Europäisches Patentamt

**European Patent Office**

Office européen des brevets

(11) Veröffentlichungsnummer: **0 094 533**
**B1**

(12) **EUROPÄISCHE PATENTSCHRIFT**

(45) Veröffentlichungstag der Patentschrift:
**12.03.86**

(21) Anmeldenummer: **83104218.9**

(22) Anmeldetag: **29.04.83**

(51) Int. Cl.⁴: **G 01 M 3/28**

(54) Verfahren zur Leckprüfung von Rohren oder Rohrnetzen.

(30) Priorität: **15.05.82 DE 3218477**

(43) Veröffentlichungstag der Anmeldung:
**23.11.83 Patentblatt 83/47**

(45) Bekanntmachung des Hinweises auf die Patenterteilung:
**12.03.86 Patentblatt 86/11**

(84) Benannte Vertragsstaaten:
**AT BE CH DE FR GB IT LI NL SE**

(56) Entgegenhaltungen:
**DE - A - 2 741 546**

(73) Patentinhaber: **Fried. Krupp Gesellschaft mit
beschränkter Haftung, Altendorfer Strasse 103,
D-4300 Essen 1 (DE)**

(72) Erfinder: **Mertens, Peter, Dr., Bekassinenstrasse 55,
D-2800 Bremen (DE)**
Erfinder: **Meuser, Wilfried, Am Lehester Deich 51,
D-2800 Bremen (DE)**

ACTORUM AG

## Beschreibung

Die Erfindung betrifft ein Verfahren zur Leckprüfung von Rohren oder Rohrnetzen der im Oberbegriff des Anspruchs 1 angegebenen Art. Unter Rohren und Rohrnetzen werden hier alle Arten von unverzweigten und verzweigten Leitungen beliebigen Querschnitts verstanden, in welchen Gas, Flüssigkeiten oder Staubpartikel transportiert werden oder die hierfür bestimmt sind.

Bei einem bekannten Verfahren dieser Art zur Dichtigkeitsprüfung von Pipelines wird die Dichtigkeit eines Rohrsystems in der Weise überprüft, dass der zu überprüfende Rohrabschnitt mit einer Flüssigkeit gefüllt und unter Druck gesetzt wird. Tritt infolge eines Lecks Flüssigkeit aus, dann sinkt der im Rohr herrschende Überdruck im Laufe der Zeit ab. Aus dem Druckabfall je Zeiteinheit und den bekannten Daten von Rohrsystem und Flüssigkeit kann dann auf das Vorhandensein und die Grösse eines Lecks geschlossen werden. („Das DD-Differenz-Druck-Verfahren zur Dichtigkeitskontrolle von im Boden verlegten Rohöl-Fernleitungen", Schweizer Archiv, April 1963, S. 131-139.)

Die Druckprobe wird erschwert durch die Tatsache, dass Druckänderungen auch ohne ein Leck dann auftreten, wenn Rohrinhalt und Rohrumgebung, z.B. Erdreich, sich nicht auf gleicher Temperatur befinden. Durch die zwischen Rohrinhalt und Rohrumgebung stattfindenden Temperaturausgleichsvorgänge steigt oder fällt der Druck im Leitungssystem bzw. im betreffenden Rohrabschnitt. Dies ist z.B. auf Flughäfen der Fall, wo der Treibstoff in Tanks gelagert wird und über ein unterirdisches Rohrnetz von einigen Kilometern Rohrlänge auf Zapfstellen verteilt wird. Durch Tankvorgänge gelangt ständig Treibstoff mit Tanktemperatur in das im Sommer relativ kühlere und im Winter wärmere Rohrsystem. Dazu kommt, dass Treibstoffmengen in den einzelnen Rohrabschnitten je nach der Vorgeschichte der Tankvorgänge unterschiedlich lange lagern und demzufolge sich mehr oder weniger an die Temperatur des umgebenden Erdreichs angleichen können. Wie in der genannten Literaturstelle gezeigt wird, bewirkt eine Temperaturänderung von nur 0,1° K in Rohölleitungen eine Druckänderung von 1 bar unabhängig vom Rauminhalt des Rohrnetzes. Andererseits tritt derselbe Druckabfall z.B. in einem 100 m³ enthaltenden Rohrabschnitt dann auf, wenn ca. 10 l ausgelaufen sind. Will man nun Leckstellen feststellen, die kleiner oder gleich 10 l/h sind, dann muss man entweder sicherstellen, dass sich die Temperatur im Rohrabschnitt um sehr viel weniger als 0,1° K/h ändert, oder man muss die mittlere Temperatur in dem Rohrabschnitt sehr genau ermitteln und die durch sie verursachte Druckschwankung rechnerisch korrigieren. Im ersten Fall kann man einen Temperaturausgleich durch Abwarten — typisch 3 d — erzwingen, da dann die Temperatur aufgrund der thermostatischen Eigenschaften des Erdbodens hinreichend konstant bleibt. Im zweiten Falle ist in jedem Falle eine hinreichende Dichte von Messstellen entlang der Rohrleitungen erforderlich. Schliesslich ist auch die Kombination beider Methoden anwendbar.

Bei einem Betankungssystem eines Flughafens sind jedoch mehrtägige Stillegungen auch nur von Teilen des Rohrnetzes nicht erträglich. Auch würden die Installation und der Betrieb eines hinreichend dichten und genauen Netzes von Temperaturmessstellen einen hohen Aufwand bedeuten.

Bei einem bekannten Verfahren zur Lecküberwachung von Rohrleitungen für den Transport gasförmiger Stoffe (DE-A-2741546) wird während der Förderung und der Förderpause der Rohrleitungsdruck überwacht und in festen Zeitabständen der Rohrleitungsdruck gemessen. Von den aufeinanderfolgenden Messwerten wird jeweils der Differenzwert gebildet. Jeder Differenzwert wird mit einer vorgegebenen zulässigen Abweichung verglichen. Bei Überschreitung der zulässigen Abweichungen in ununterbrochener Folge der Differenzwerte werden letztere gespeichert. Auf Leck wird dann erkannt, wenn mehr als z.B. drei unmittelbar aufeinanderfolgende Speicherwerte auftreten. Soweit dieses quasistatistische Verfahren für eine zuverlässige Lecküberwachung überhaupt geeignet ist, ist es höchstens in Gasversorgungssystemen einsetzbar.

Der Erfindung liegt die Aufgabe zugrunde, ein Verfahren der eingangs genannten Art zu schaffen, mit welchem bei geringem technischen Aufwand Lecks — auch solche mit relativ geringer Grösse — in kurzer Zeit auch dann sicher und zuverlässig erfasst werden können, wenn sich die Temperatur des Rohrinhalts selbst während des Prüfvorgangs ändert.

Die Aufgabe ist bei einem Verfahren zur Lecküberwachung der im Oberbegriff des Anspruchs 1 definierten Gattung erfindungsgemäss durch die Merkmale im Kennzeichnungsteil des Anspruchs 1 gelöst.

Mit dem erfindungsgemässen Verfahren können selbst kleine Leckströme von etwa 1 l/h erkannt werden. Voraussetzung hierfür sind lediglich geeignete Drucksensoren, die eine ausreichende Reproduziergenauigkeit relativ zu dem maximalen Überdruck im Rohrnetz aufweisen, und ein hinreichend kleines Absperrvolumen. Handelsübliche Drucksensoren mit 0,1% Reproduziergenauigkeit bei 10 bar maximalem Überdruck genügen hierfür bereits. Für jedes Messintervall ist dabei eine Zeitdauer von grössenordnungsmässig 10 min ausreichend.

Das erfindungsgemässe Verfahren ist temperaturunabhängig, so dass weder der bisher erforderliche immense Aufwand für ein umfangreiches Messstellennetz zur Temperaturmessung im Rohrsystem erforderlich ist, noch lange Wartezeiten für den Temperaturausgleich zwischen Rohrinhalt und Rohrumgebung in Kauf genommen werden müssen. Im Gegensatz zu leckbedingten Druckänderungen sind temperaturbedingte Drückänderungen praktisch nicht von den Ausgangsdruckniveaus im Rohrabschnitt abhängig. Da bei dem erfindungsgemässen Verfahren die Differenz der zeitnormierten Druckabfälle bei zwei verschiedenen Ausgangsdruckniveaus gebildet wird, heben sich die temperaturbedingten Anteile weitgehend heraus. Dies führt so lange zu absolut zuverlässigen Ergebnissen, als die Messzeit, d.h. die Summe der Zeitdauer der vorzugsweise unmittelbar aufeinanderfolgenden Messintervalle, sehr klein gegenüber der Halbwertzeit eines Temperaturausgleichsvorgangs zwischen dem Rohrinneren und -äusseren ist und somit für die Messzeit ein quasilinearer temperaturbedingter Druckverlauf besteht.

Kann diese Annahme nicht mit ausreichender Sicherheit getroffen werden, z.B. weil aufgrund eines sehr kleinen zugelassenen maximalen Leckstroms, eines grossen Flüssigkeitsvolumens oder einer geringen Messgenauigkeit der Drucksensoren die Zeitdauer der Messintervalle relativ gross gewählt werden muss, so lässt sich die Zuverlässigkeit des erfindungsgemässen Verfahrens durch die weitere Ausgestaltung gemäss Anspruch 5 steigern. Durch diese Massnahmen wird die Druckänderung bei unterschiedlichen Ausgangsdruckniveaus quasi in dem gleichen Messintervall mit gleichen Zeitgrenzen erfasst und damit der Einfluss von Temperaturänderungen auf den Druckverlauf nahezu vollständig eliminiert. Da die Änderung des Ausgangsdruckniveaus und die Erfassung der jeweils zugeordneten Druckänderung praktisch jedoch nur zeitlich nacheinander — und nicht gleichzeitig — vorgenommen werden können, wird die Druckänderungserfassung für das eine Ausgangsdruckniveau einmal zeitlich vor und einmal zeitlich nach der Druckänderungserfassung für das andere Ausgangsdruckniveau durchgeführt und auf den Zeitraum der Druckänderungserfassung für das letztgenannte Ausgangsdruckniveau umgerechnet, so dass die Druckänderungen für beide Ausgangsdruckniveaus „pseudo-gleichzeitig" erfasst werden.

Eine vorteilhafte Ausgestaltung des erfindungsgemässen Verfahrens ergibt sich aus Anspruch 2. Durch die Vorgabe konstanter Messintervalle wird die Normierung der Druckänderungen auf eine Bezugszeiteinheit überflüssig und die Auswertung erleichtert.

Eine vorteilhafte Ausgestaltung des erfindungsgemässen Verfahrens ergibt sich auch aus Anspruch 3. Durch die vorgesehene Regressionsrechnung kann bei überlagerten statistischen Schwankungen des Druckverlaufs und/oder der Messwertanzeige eine Druckänderung ermittelt werden, die zu brauchbaren Ergebnissen für die Leckprüfung und -erkennung führt.

Eine vorteilhafte Ausgestaltung des erfindungsgemässen Verfahrens ergibt sich aus Anspruch 6. Durch diese Festlegung des Vorgabewertes werden selbst die bei der Näherungsrechnung gemäss Anspruch 5 verbleibenden Restfehler eliminiert und können eine Fehlerkennung nicht hervorrufen. Der Vorgabewert $\Delta p_v$ lässt sich aus den Gesetzmässigkeiten im Leckkanal berechnen. Liegen turbulente Strömungsverhältnisse im Leckkanal vor, so ist die je Zeiteinheit auslaufende Flüssigkeitsmenge proportional zur Wurzel der Druckdifferenz zwischen Rohrinnerem und -äusserem, und der Vorgabewert berechnet sich aus

$$\Delta p_v = \frac{K \cdot t}{V \cdot B} \left( \sqrt{p_{a1}} - \sqrt{p_{a2}} \right) \qquad (1)$$

wobei sind:
die Konstante K der Quotient aus dem maximal zulässigen Leckstrom (z.B. 1 l/h) und dem radizierten, im Rohrnetz maximal auftretenden Druck, V das Flüssigkeitsvolumen im abgeschlossenen Rohrabschnitt, t die Zeitspanne und $p_{a1}$ und $p_{a2}$ zwei unterschiedliche Ausgangsdruckniveaus.

Die Konstante B ist eine von der Geometrie des Rohrnetzes abhängige Grösse und wird berechnet nach

$$B = \frac{D}{d \cdot E} + b \qquad (2)$$

Dabei sind:
D der Durchmesser der Rohrleitung,
d die Wanddicke der Rohrleitung,
E der Elastizitätsmodul des Rohrwerkstoffes,
b die Kompressibilität der im Rohrnetz enthaltenen Flüssigkeit.

Bei einem Flüssigkeitsvolumen von V = 40 m³, einem zulässigen Leckstrom von 10 l/h, einem ersten Ausgangsdruckniveau von $p_{a1}$ = 9 bar und einem zweiten Ausgangsdruckniveau von $p_{a2}$ = 3 bar, einer Zeitdauer der Messintervalle von t = 10 min und einem Wert von B = $1,19 \cdot 10^{-4}$ bar$^{-1}$ ergibt sich ein Vorgabewert $\Delta p_v$ = 0,147 bar.

Allgemein—d.h. ohne Festlegung auf turbulente Strömungen — lässt sich Gleichung (1) mit $K = \frac{\frac{L}{t}}{p^u}$ schreiben:

$$\Delta p_v = \frac{\left(\frac{L}{t}\right) \cdot t}{V \cdot B} \cdot \frac{p_{a1}^u - p_{a2}^u}{p^u} \qquad (1a)$$

wobei u je nach Art der Strömung im Leck einen Wert zwischen 0,3 und 0,8 annehmen kann und für reine Turbulenz 0,5 beträgt. L ist die Leckmenge, $\left(\frac{L}{t}\right)$ die pro Zeiteinheit austretende Leckmenge, also der Leckstrom, und p — wie vorstehend erwähnt — der im Rohrnetz maximal auftretende Druck. Will man in unter stets konstantem Betriebsdruck stehenden Rohrsystemen Lecks ab einer vorgegebenen Minimalgrösse erkennen, wie dies bei unterirdischen Tanknetzen auf Flughäfen der Fall ist, so ist es zweckmässig, für den Druck p anstelle des maximal auftretenden Drucks den Betriebsdruck $p_B$ des Rohrsystems einzusetzen.

Kenntnis von der Art der Flüssigkeitsströmung im Leck ist nur erforderlich, wenn Lecks vorgegebener Grösse innerhalb nur geringer Toleranzen erfasst werden sollen. Ansonsten genügt die Annahme turbulenter Strömung vollständig. Der hierbei gemachte Fehler lässt sich berechnen zu

$$\Delta p_{v(u)} = \Delta p_{v(0,5)} \cdot \frac{p^{0,5}(p_{a1}^u - p_{a2}^u)}{p^u (p_{a1}^{0,5} - p_{a2}^{0,5})} \qquad (1b)$$

Bei den vorstehend getroffenen Annahmen für $p_v$, $p_{a1}$ und $p_{a2}$ ergibt sich dabei für $\Delta p_v$ ein Fehler von −34 und +47%, d.h. es werden u.U. nicht nur Lecks mit Leckverlusten von grösser 10 l/h, sondern nur solche mit Leckverlusten von grösser

15 l/h (u = 0,3) oder sogar Lecks mit Leckverlusten ab ≈ 7 l/h (u = 0,8) erfasst.

Eine vorteilhafte Ausgestaltung des erfindungsgemässen Verfahrens ergibt sich auch aus Anspruch 7. Wird der Vorgabewert annähernd 0 gesetzt, so können selbst kleinste Leckströme sicher erkannt werden. Voraussetzung für die Zuverlässigkeit dieses Vorgabewertes und damit für die Vermeidung einer hohen Falschalarmrate ist jedoch einerseits, dass temperaturbedingte zeitliche Druckänderungen konstant sind, der temperaturbedingte Druckverlauf also absolut linear ist, und andererseits die Ausschaltung von Messungenauigkeiten.

Eine weitere vorteilhafte Ausgestaltung des erfindungsgemässen Verfahrens ergibt sich aus Anspruch 8, auch in Verbindung mit Anspruch 9. Durch diese Massnahmen kann bei Leckfeststellung die unter Betriebsbedingungen im Rohrsystem oder Rohrabschnitt auslaufende Leckmenge pro Zeiteinheit abgeschätzt werden. Dadurch können sichere und ausgewogene Entscheidungen bezüglich der Weiterführung oder Stillegung des Rohrsystems getroffen werden. Z.B. ergibt die Kenntnis von der Grösse des Lecks Entscheidungshilfen, einen Rohrabschnitt abzuschotten oder sofort auszupumpen, weil das Leck zu gross ist. Andererseits kann das detektierte Leck wegen der ausfliessenden kleinen Leckmenge nur zur Kenntnis genommen und durch Anwendung entsprechender Rechnung auf den Leckstrom Trends im Verhalten des Lecks erkannt werden.

Eine vorteilhafte Ausgestaltung des erfindungsgemässen Verfahrens ergibt sich aus Anspruch 10, insbesondere in Verbindung mit Anspruch 11. Durch diese Massnahmen werden bei vergrabenen Rohren oder Rohrnetzen in der Praxis beobachtete sog. Kriechvorgänge, die sich verfälschend bei der Messung der Druckänderungen auswirken, rechnerisch kompensiert. Solche Kriechvorgänge machen sich bei Druckänderungen im temperaturstabilen Rohr oder Rohrnetz dadurch bemerkbar, dass sich zunächst ein höherer (Druckerhöhung) bzw. ein niedrigerer (Druckerniedrigung) Druck als vorgegeben einstellt, der nachfolgend mit einer Zeitkonstante von etwa 0,5-1 h wieder abfällt bzw. ansteigt und dann konstant bleibt.

Die Kompensation der Kriechvorgänge erlaubt einerseits eine Reduzierung der Falschalarmrate und eine genauere Schätzung der pro Zeiteinheit ausfliessenden Leckmenge und andererseits Messungen in nur kurzen Zeitabständen, wobei die Messphasen bereits einige Minuten nach der Einstellung des jeweiligen Ausgangsdruckniveaus beginnen können und die Abstände der Einstellungen voneinander, die sog. Messintervalle, nicht grösser als 10 min zu sein brauchen.

Die Konstante C, mit welcher die Differenz der Ausgangsdruckniveaus zu multiplizieren ist, ist rohrnetzspezifisch und lässt sich entsprechend einer weiteren Ausgestaltung der Erfindung gemäss Anspruch 12 mit den dort angegebenen Verfahrensschritten empirisch bestimmen. Versuche haben ergeben, dass die Konstante C weitgehend unabhängig von der Rohrnetz- und Rohrgestaltung ist, doch in gewissem Masse von der Struktur des das Rohrnetz umgebenden Erdreichs abhängig ist. Für ein in Sand eingebettetes Rohrsystem wurde die Konstante C zu $16 \cdot 10^{-6}$ s$^{-1}$ bestimmt.

Die Erfindung ist anhand eines Ausführungsbeispiels der Lecküberwachung eines Flugzeugbetankungssystems auf einem Flughafen unter Bezugnahme auf die Zeichnung im folgenden näher beschrieben. Es zeigen:

Fig. 1 eine schematische Darstellung eines Betankungssystems eines Flughafens,

Fig. 2 ein Diagramm eines angenommenen temperaturbedingten zeitlichen Druckverlaufs in einem abgeschlossenen Rohrabschnitt mit konstantem Flüssigkeitsvolumen.

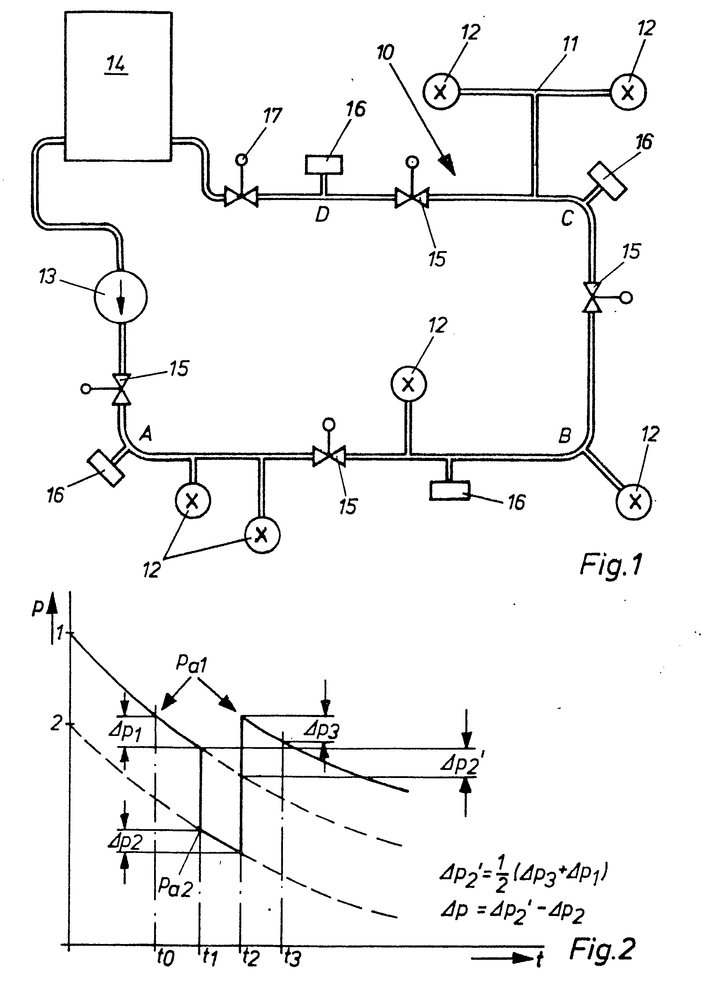

Das in Fig. 1 schematisch dargestellte Betankungssystem eines Flughafens weist ein im Erdboden verlegtes Rohrnetz 10 aus einer Vielzahl von miteinander verbundenen verzweigten Rohrleitungen 11 auf. Am Ende der Rohrleitungen 11, die teilweise als Stichleitungen ausgeführt sind, sind Hydranten 12 angeschlossen. Die Betankung der Flugzeuge erfolgt über sog. Servicer, die den Treibstoff an den Hydranten 12 abnehmen, feinreinigen, auf Tankdruck reduzieren und anschliessend in den Flugzeugtank leiten. Das Rohrnetz 10 wird über mindestens eine Hauptpumpe 13 aus einem oberirdischen Treibstofftank 14 mit Treibstoff versorgt. Die Hauptpumpe 13 stellt auch den nötigen Überdruck in den Rohrleitungen 11 des Rohrnetzes 10 sicher. Das Rohrnetz 10 kann mittels fernsteuerbarer Absperrschieber 15 in einzelne Rohrabschnitte mit vorgegebenen Flüssigkeitsvolumen V unterteilt werden. In Fig. 1 ist das Rohrnetz 10 in vier Rohrabschnitte A bis D unterteilbar. In jedem Rohrabschnitt ist ein Drucksensor 16 zur Druckmessung vorgesehen.

Eine Leckprüfung erfolgt einmal am Tage in einer längeren, meist mehrstündigen Tankpause, in welcher eine Treibstoffentnahme aus dem Rohrnetz 10 wegen des ruhenden Flughafenverkehrs nicht stattfindet. Mittels der Hauptpumpe 13 wird bei geöffneten Absperrschiebern 15 der Druck in allen Rohrleitungen 11 des Rohrnetzes 10 auf ein erstes Ausgangsdruckniveau $p_{a1}$ von z.B. 9 bar eingestellt. Dann werden sämtliche Absperrschieber 15 geschlossen, so dass vier hermetisch abgeschlossene Rohrabschnitte A bis D mit einem im Verhältnis zur Messgenauigkeit und dem zugelassenen maximalen Leckstrom hinreichend kleinen Flüssigkeitsvolumen, das in den einzelnen Rohrabschnitten A bis D unterschiedlich sein kann und im Beispiel 40 m³ beträgt, entstehen. Das hinreichend kleine Flüssigkeitsvolumen lässt sich anhand der Gleichung (1) abschätzen, wenn man die Messgenauigkeit der verwendeten Drucksensoren 16 kennt und hiernach den Vorgabewert $\Delta p_v$ festlegt. Die Konstante K enthält den zulässigen Leckstrom und B ist durch die Geometrie des Rohrnetzes und der Art der Flüssigkeit bestimmt.

In jedem Rohrabschnitt A bis D wird nunmehr eine Leckprüfung durchgeführt, die anhand der Leckprüfung des Rohrabschnittes A im folgenden beschrieben wird.

In einem ersten Messintervall mit einer Zeitdauer von z.B. 10 min wird die Druckänderung $\Delta p_1$ mittels des Drucksensors 16, ausgehend von dem ersten Ausgangsdruckniveau $p_{a1} = 9$ bar, gemessen. Danach werden alle Absperrschieber 15 wieder geöffnet und der Druck in den Rohrabschnitten A bis D auf ein zweites Ausgangsdruckniveau $p_{a2}$ von z.B. 3 bar abgesenkt, was durch gesteuertes Öffnen eines weiteren Absperrschiebers 17 erfolgen kann. Ist der Druck im Rohrnetz 10 3 bar, so werden wiederum alle Absperrschieber 15 geschlossen. Nunmehr wird in dem Rohrabschnitt A in einem zweiten Messintervall gleicher Dauer von 10 min die Druckänderung $\Delta p_2$, ausgehend von dem zweiten Ausgangsdruckniveau $p_{a2} = 3$ bar, mittels des Drucksensors 16 gemessen.

Aus den in den beiden Messintervallen erfassten Druckänderungen $\Delta p_1$ und $\Delta p_2$ wird nunmehr eine Druckänderungsdifferenz $\Delta p$ gebildet und mit einem Vorgabewert $\Delta p_v$ verglichen. Ist ein Leck vorhanden, so ist der austretende Leckstrom vom Überdruck im Rohrabschnitt abhängig. Je höher dieser ist, desto grössere Leckverluste entstehen. Da beim Ausströmen im allgemeinen turbulente Strömungsverhältnisse vorliegen, ist die Leckmenge eine Funktion der Wurzel der Druckdifferenz zwischen dem Druck im Rohrsystem und dem Umgebungsdruck. Der zeitliche Verlauf des Drucks ergibt sich aus

$$p = (\sqrt{p_a} - \frac{K}{2V \cdot B} \cdot t)^2 \qquad (3)$$

wobei die Grössen mit dem zu Gleichungen (1) und (2) angegebenen übereinstimmen. Durch die Ausgangsdruckabhängigkeit des Leckstroms ergibt sich bei Vorliegen eines Lecks in jedem Fall eine Druckänderungsdifferenz. Im Idealfall kann daher der Vorgabewert $\Delta p_v$ zu 0 gemacht werden. Um aber die Falschalarmrate möglichst klein zu halten (Abweichungen von 0 können bereits durch Messungenauigkeiten auftreten!), wird der Vorgabewert $\Delta p_v$, wie eingangs beschrieben, berechnet und beträgt z.B. bei einer maximal zulässigen Leckstromvorgabe von 10 l/h, einem Flüssigkeitsvolumen im Rohrabschnitt A von 40 m³, einer Messintervallzeit von 10 min als Bezugszeiteinheit und bei den angegebenen beiden Ausgangsdrücken 0,147 bar. Ist die Druckänderungsdifferenz $\Delta p$ grösser als dieser Vorgabewert $\Delta p_v$, so kann mit Sicherheit darauf geschlossen werden, dass in dem Rohrabschnitt A ein Leck vorhanden ist. Dieser Vorgang kann mehrmals wiederholt werden, wodurch die Aussagesicherheit wesentlich erhöht wird.

Zur Verbesserung der Druckänderungserfassung im Hinblick auf Ausschaltung statistischer Schwankungen des Drucks oder der Messwertanzeige ist es auch möglich, in jedem Messintervall mehrere Druckmessungen vorzunehmen und die Druckänderung im Messintervall durch eine Ausgleichs- oder Regressionsrechnung aus den Druckwerten zu gewinnen.

Das vorstehend beschriebene Messverfahren ist ausreichend, wenn davon ausgegangen werden kann, dass temperaturbedingte Druckänderungen im wesentlichen konstant sind, der durch ein Temperaturgefälle hervorgerufene Druckverlauf als Funktion der Zeit in etwa linear ist. Selbst grössere Abweichungen von der Linearität führen zu keiner Verfälschung des Ergebnisses, da der Vorgabewert aufgrund eines relativ hohen zugelassenen Leckstroms gross ist. Wird der zu gelassene maximale Leckstrom wesentlich verkleinert, z.B. mit 1 l/h vorgegeben, so ist es zweckmässig, auch temperaturbedingte Druckänderungen besser zu kompensieren. Ebenso muss dann auch die geringe, im Prinzip bekannte Druckabhängigkeit der Grösse b in Gleichung (2) berücksichtigt werden.

In Fig. 2 sind beispielhaft zwei Druckverläufe im Rohrabschnitt A als Funktion der Zeit dargestellt. Bei diesem Druckverlauf ist die Annahme getroffen, dass kein Leck im Rohrabschnitt A vorhanden ist und der Druckabfall ausschliesslich durch ein Temperaturgefälle zwischen dem Erdboden und der Flüssigkeit im Rohrabschnitt A hervorgerufen wird. Dabei ist davon ausgegangen, dass ein linearer Druckverlauf über der Zeit nicht mehr gegeben ist. In diesem Fall wird, wie vorstehend bereits beschrieben, die Druckänderung, hier Druckabfall, in einem ersten Messintervall zwischen der Zeit $t_0$ und $t_1$ (10 min) bei einem Ausgangsdruckniveau $p_{a1} = 9$ bar, der Druckabfall in einem zweiten Messintervall zwischen den Zeitgrenzen $t_1$ und $t_2$ (10 min) bei einem Ausgangsdruckniveau von $p_{a2} = 3$ bar und der Druckabfall in einem dritten Messintervall mit den Zeitgrenzen $t_2$ und $t_3$ (10 min) mit einem Ausgangsdruckniveau wiederum $p_{a1} = 9$ bar gemessen. Aus den im ersten und dritten Messintervall bestimmten Druckabfällen $\Delta p_1$ und $\Delta p_3$ (Fig. 2) wird nunmehr durch Näherungsrechnung, z.B. durch Interpolation, ein Druckabfall im zweiten Messintervall mit den Zeitgrenzen $t_1$ und $t_2$ und einem Ausgangsdruckniveau von $p_{a1} = 9$ bar ermittelt. Aus diesem so berechneten „Pseudo-Druckabfall'' $\Delta p'_2$ im zweiten Messintervall mit dem Ausgangsdruckniveau $p_{a1} = 9$ bar und dem im zweiten Messintervall gemessenen Druckabfall $\Delta p_2$ bei einem Ausgangsdruckniveau $p_{a2} = 3$ bar wird nunmehr die Druckabfalldifferenz $\Delta p$ berechnet. Ist kein Leck im Rohrabschnitt A vorhanden, so müsste diese Differenz in etwa 0 sein, in jedem Fall ist sie aber wesentlich kleiner als der Vorgabewert $\Delta p_v$.

Ist ein Leck im Rohrabschnitt A nachgewiesen, so kann die unter Betriebsbedingung des Rohrnetzes 10 durch dieses Leck in der gleichen Zeitdauer der Messintervalle, z.B. 10 min ausströmende Leckmenge L grössenordnungsmässig abgeschätzt werden, indem man gemäss nachfolgender Gleichung (4)

$$L = \varkappa \cdot \frac{\Delta p}{\sqrt{p_{a1}} - \sqrt{p_{a2}}} \qquad (4)$$

die im Messintervall gemessene zeitnormierte Druckänderungsdifferenz mit dem Kehrwert der Differenz der radizierten Ausgangsdruckniveaus $p_{a1}$ und $p_{a2}$ und mit einer Konstanten multipliziert. Die Konstante $\varkappa$ ist dabei systemspezifisch und von dem Betriebsdruck $p_B$ des Rohrnetzes 10 abhängig und wird bestimmt gemäss Gleichung (5) zu

$$\varkappa = B \cdot V \cdot \sqrt{p_B} \qquad (5)$$

wobei die Konstante B nach Gleichung (2) berechnet wird und V das abgesperrte Volumen des Rohrabschnitts A darstellt.

Mit den eingangs für ein Ausführungsbeispiel angegebenen Werten und einem Betriebsdruck des Rohrnetzes 10 von 7 bar bestimmt sich die Konstante $\varkappa$ nach Gleichung (5) zu

$$\varkappa = 12{,}6 \; \ell \cdot \text{bar}^{-\frac{1}{4}}$$

Der Schätzungsfehler für die an der Bezugszeiteinheit ausfliessende Leckmenge liegt in dem Beispiel dabei zwischen −37 und +49%, was zur Beurteilung der Leckgrösse und der danach zu ergreifenden Massnahmen durchaus ausreichend ist. Der Schätzungsfehler beruht darauf, dass in Gleichungen (4) und (5) wiederum eine turbulente Strömung im Leck vorausgesetzt wird. Die tatsächliche, in der Bezugszeiteinheit ausfliessende Leckmenge beträgt mit Gleichungen (4) und (5)

$$L = B \cdot V \cdot \frac{p_B^u}{p_{a1}^u - p_{a2}^u} \cdot \Delta p \qquad (6)$$

wobei u Werte zwischen 0,3 und 0,8 je nach Art der Strömung im Leck annehmen kann und für Turbulenz 0,5 zu setzen ist.

Bei Messungen hat sich gezeigt, dass bei vergrabenen Rohrnetzen Kriechvorgänge auftreten, die sich dadurch äussern, dass bei Einstellung des Ausgangsdruckniveaus, also bei Druckerhöhung bzw. Druckerniedrigung, in dem temperaturstabilen, d.h. mit der Umgebung temperaturausgeglichen, Rohrabschnitt zunächst sich ein gegenüber dem Ausgangsdruckniveau etwas erhöhter bzw. erniedrigter Druck einstellt, der dann mit einer Zeitkonstanten von etwa 0,5 bis 1 h abfällt bzw. ansteigt und dann konstant bleibt. Werden in dieser Zeit die Druckänderungsmessungen durchgeführt − was für die schnelle Durchführung der Leckprüfung angestrebt wird −, so wirken sich die Kriechvorgänge verfälschend auf das Messergebnis aus. Z.B. können diese Kriechvorgänge bei völlig dichtem Rohrabschnitt einen Leckstrom von 5-7 l/h vortäuschen. Um diese Vorgänge zu kompensieren, wird die gemessene zeitnormierte Druckänderungsdifferenz $\Delta p$ noch um einen Faktor $\alpha$ reduziert, bevor sie mit dem Vorgabewert $\Delta p_v$ verglichen oder zur Schätzung der pro Zeiteinheit austretenden Leckmenge L herangezogen wird. Der Faktor $\alpha$ ist abhängig von der Differenz der Ausgangsdruckniveaus $p_{a1}$ und $p_{a2}$ und berechnet sich nach Gleichung (7) zu

$$\alpha = C \, (p_{a1} - p_{a2}) \qquad (7)$$

Die Konstante C lässt sich empirisch bestimmen, indem an dem dichten Rohrnetz oder an den einzelnen Rohrabschnitten jeweils die in Messintervallen auftretenden Druckänderungsdifferenzen $\Delta p$ bei einer Vielzahl von unterschiedlich eingestellten Ausgangsdruckniveaus $p_{a1}$ und $p_{a2}$ gemessen werden. Die zeitnormierten Druckänderungsdifferenzen werden dann als lineare Funktion der Differenz der Ausgangsdruckniveaus $p_{a1}$ und $p_{a2}$ aufgetragen und daraus die Konstante C als Steigung der Geraden gemäss Gleichung (8) ermittelt

$$C = \frac{\Delta p}{p_{a1} - p_{a2}} \qquad (8)$$

Die Erfindung ist nicht auf das vorstehend beschriebene Ausführungsbeispiel beschränkt. So sind die angegebenen Werte für die Zeit- und Druckintervalle nicht zwingend, sondern vielmehr an die örtlichen Verhältnisse des Rohrnetzes und der Art und Menge der Flüssigkeit angepasst. Auch ist es nicht zwingend, die Druckänderungsdifferenz durch Einstellung eines zunächst hohen und dann niedrigen Ausgangsdruckniveaus in aufeinanderfolgenden Messintervallen zu bestimmen. Die umgekehrte Einstellung der Ausgangsdruckniveaus bringt gleiche Ergebnisse mit sich. Die Erfindung ist auch nicht auf die Bestimmung der Druckänderungsdifferenz in zwei oder drei Messintervallen und auf nur zwei Stufen des Ausgangsdruckniveaus beschränkt. So können in mehreren Messintervallen auch mehrere, voneinander verschiedene Ausgangsdruckniveaus eingestellt werden. Auch die Wahl von Messintervallen gleicher Zeitdauer ist nicht zwingend. Wird die Zeitdauer der einzelnen Messintervalle verschieden gewählt, so müssen die Druckänderungen, die Druckänderungsdifferenz und der Vorgabewert und die geschätzte Leckmenge normiert, d.h. auf die gleiche Zeiteinheit bezogen werden. Erfasste Druckänderungen müssen dann noch durch die Zeitdauer der einzelnen Messintervalle dividiert und mit der Bezugszeiteinheit multipliziert werden. An dem Verfahren ändert sich dabei nichts. Die Berechnung des Vorgabewertes und die Schätzung der Leckmenge erfolgt dann mit der Bezugszeiteinheit. Gleichbedeutend damit ist, die Steigung des Druckverlaufs zu vorgegebenen Zeitpunkten im Messintervall zu bestimmen, also das zeitliche Differential des Drucks zu bestimmen.

Bei der Leckprüfung ist es auch möglich, dass als Druckänderung nicht ein Druckabfall, sondern ein Druckanstieg erfasst wird. Dies ist der Fall, wenn z.B. die Temperatur der Flüssigkeit zunächst kühler ist als die der Rohrumgebung. Aufgrund der bei einem Leck aber immer auftretenden Druckänderungsdifferenz zwischen den Druckänderungen bei zwei verschiedenen Ausgangsdruckniveaus wird das Leck sicher erkannt.

Das erfindungsgemässe Verfahren ist nicht nur zur Leckprüfung von flüssigkeitsgefüllten Rohren oder Rohrnetzen, wie sie von dem beschriebenen Betankungssystem dargestellt werden, geeignet. Mit dem Verfahren können auch leere Rohre oder solche, die zum Gas- oder Staubtransport bestimmt sind, auf Leck geprüft werden. In diesem Fall sind die Rohre oder Rohrnetze − ggf. unter Unterteilung in Rohrabschnitte − mit Flüssigkeit zu füllen und endseitig zu verschliessen.

## Patentansprüche

1. Verfahren zur Leckprüfung von Rohren oder Rohrnetzen (10), bei welchem in einzelnen, voneinander trennbaren Rohrabschnitten (A-D) eine Flüssigkeit unter Druck gesetzt, der Flüssigkeitsdruck auf ein Ausgangsdruckniveau eingestellt und für jeden Rohrabschnitt, ausgehend von diesem Ausgangsdruckniveau, eine Druckänderung bestimmt wird, dadurch gekennzeichnet, dass der Flüssigkeitsdruck auf mindestens zwei verschiedene Ausgangsdruckniveaus ($p_{a1}$, $p_{a2}$) eingestellt wird, dass die Druckänderungen ($\Delta p_1$, $\Delta p_2$) bei den verschiedenen Ausgangsdruckniveaus ($p_{a1}$, $p_{a2}$) in aufeinanderfolgenden Messintervallen erfasst und auf eine Zeiteinheit bezogen, d.h. zeitnormiert, werden, dass aus den zeitnormierten Druckänderungen ($\Delta p_1$, $\Delta p_2$) eine zeitnormierte Druckänderungsdifferenz ($\Delta p$) gebildet wird, dass geprüft wird, ob die zeitnormierte Druckänderungsdifferenz ($\Delta p$) grösser ist als ein auf die gleiche Zeiteinheit bezogener, d.h. zeitnormierter, Vorgabewert ($\Delta p_v$).

2. Verfahren nach Anspruch 1, dadurch gekennzeichnet, dass die Druckänderungen ($\Delta p_1$, $\Delta p_2$) in Messintervallen gleicher zeitlicher Dauer erfasst werden und die Bezugszeiteinheit des Vorgabewerts ($\Delta p_v$) gleich der Zeitdauer (t) der Messintervalle gewählt wird.

3. Verfahren nach einem der Ansprüche 1 oder 2, dadurch gekennzeichnet, dass die Druckänderung ($\Delta p_1$, $\Delta p_2$) in einem Messintervall durch eine Ausgleichsrechnung aus mehreren, im Messintervall gemessenen Druckwerten gewonnen wird.

4. Verfahren nach einem der Ansprüche 1 bis 3, dadurch gekennzeichnet, dass die Grösse der trennbaren Rohrabschnitte (A-D) derart gewählt wird, dass das darin eingeschlossene Flüssigkeitsvolumen im Verhältnis zum Auflösungsvermögen der Druckmessung und des zu erkennenden kleinsten Leckstroms ausreichend klein ist.

5. Verfahren nach einem der Ansprüche 1 bis 4, dadurch gekennzeichnet, dass die Druckänderungen in jeweils drei unmittelbar aufeinanderfolgenden Messintervallen ($t_0/t_1$, $t_1/t_2$, $t_2/t_3$) bestimmt werden, wobei das Ausgangsdruckniveau ($p_{a1}$) im ersten und dritten Messintervall ($t_0/t_1$, $t_2/t_3$) gleich und von dem Ausgangsdruckniveau ($p_{a2}$) im mittleren Messintervall ($t_1/t_2$) verschieden ist, dass aus den Druckänderungen ($\Delta p_1$, $\Delta p_3$) im ersten und dritten Messintervall ($t_0/t_1$, $t_2/t_3$) eine Druckänderung ($\Delta p'_2$) für den Zeitraum des mittleren Messintervalls ($t_1/t_2$) durch Näherungsrechnung, z.B. Interpolation, gewonnen wird und aus der so gewonnenen Druckänderung ($\Delta p'_2$) und der im mittleren Messintervall ($t_1/t_2$) bestimmten Druckänderung ($\Delta p_2$) die Druckänderungsdifferenz ($\Delta p$) gebildet wird.

6. Verfahren nach einem der Ansprüche·1 bis 5, dadurch gekennzeichnet, dass der Vorgabewert ($\Delta p_v$) aus einem zulässigen Maximalleckstrom, aus dem Maximaldruck und dem Flüssigkeitsvolumen in dem entsprechenden Rohrabschnitt (A-D) und aus der Zeitdauer (t) und den Ausgangsdruckniveaus ($p_{a1}$, $p_{a2}$) der zur Druckänderungsdifferenz ($\Delta p$) herangezogenen Messintervalle berechnet wird.

7. Verfahren nach einem der Ansprüche 1 bis 5, dadurch gekennzeichnet, dass der Vorgabewert ($\Delta p_v$) annähernd 0 gesetzt wird.

8. Verfahren nach einem der Ansprüche 1 bis 7, dadurch gekennzeichnet, dass die Ausgangsdruckniveaus ($p_{a1}$, $p_{a2}$) der Messintervalle kleiner als 10 bar und ihr Verhältnis in verschiedenen Messintervallen etwa 1:3 gewählt wird.

9. Verfahren nach einem der Ansprüche 1 bis 8, dadurch gekennzeichnet, dass die zeitnormierte Druckänderungsdifferenz ($\Delta p$) mit dem Kehrwert der Differenz aus den radizierten Ausgangsdruckniveaus ($p_{a1}$, $p_{a2}$) und mit einer rohr- oder rohrnetzspezifischen Konstanten multipliziert und das Produkt als bei Betriebsdruck des Rohres oder Rohrnetzes in der Bezugszeiteinheit ausfliessende geschätzte Leckmenge ausgegeben wird.

10. Verfahren nach Anspruch 9, dadurch gekennzeichnet, dass die rohr- oder rohrnetzspezifische Konstante als Produkt aus einer von der Geometrie und dem Material des Rohres oder Rohrnetzes und der Kompressibilität der Flüssigkeit abhängigen Konstanten, dem Flüssigkeitsvolumen in dem entsprechenden Rohrabschnitt (A-D) und dem radizierten Betriebsdruck des Rohres oder Rohrnetzes bestimmt wird.

11. Verfahren nach einem der Ansprüche 1 bis 10, dadurch gekennzeichnet, dass die zeitnormierte Druckänderungsdifferenz ($\Delta p$) vor Anwendung des Leckprüfkriteriums bzw. vor Leckmengenschätzung um einen der Druckdifferenz ($p_{a1} - p_{a2}$) zwischen den Ausgangsdruckniveaus ($p_{a1}$, $p_{a2}$) proportionalen Korrekturfaktor reduziert wird.

12. Verfahren nach Anspruch 11, dadurch gekennzeichnet, dass als Korrekturfaktor das Produkt aus der Differenz der Ausgangsdruckniveaus ($p_{a1}$, $p_{a2}$) und einer Konstanten eingesetzt wird.

13. Verfahren nach Anspruch 12, dadurch gekennzeichnet, dass die Konstante für jeden Rohrabschnitt (A-D) durch Messungen am leckfreien Rohrabschnitt (A-D) ermittelt wird, derart, dass eine Vielzahl von Druckänderungsbestimmungen bei variierten Ausgangsdruckniveaus ($p_{a1}$, $p_{a2}$) durchgeführt und die zeitnormierten Druckänderungsdifferenzen ($\Delta p$) als Funktion der Differenz ($p_{a1} - p_{a2}$) der jeweiligen Ausgangsdruckniveaus ($p_{a1}$, $p_{a2}$) ermittelt werden.

## Claims

1. Method for testing pipes or pipe networks (10) for leaks, in which a fluid is placed under pressure in individual mutually separable pipe sections (A-D), the fluid pressure is adjusted to an initial pressure level and for each pipe section, starting from this initial pressure level, a pressure variation is determined, characterised in that the fluid pressure is adjusted to at least two different initial pressure levels ($p_{a1}$, $p_{a2}$), in that the pressure variations ($\Delta p_1$, $\Delta p_2$) in the different initial pressure levels ($p_{a1}$, $p_{a2}$) are detected in successive measurement intervals and related to a time unit, that is time-standardised, in that a time-standardised pressure variation difference ($\Delta p$) is formed from the time-standardised pressure variations ($\Delta p_1$, $\Delta p_2$), in that it is tested whether the time-standardised pressure variation difference ($\Delta p$) is greater than a preset value ($\Delta p_v$) related to the same time unit, that is time-standardised.

2. Method according to Claim 1, characterised in that the pressure variations ($\Delta p_1$, $\Delta p_2$) are detected in measurement intervals of equal time duration and the reference time unit of the preset value ($\Delta p_v$) is made equal to the time duration (t) of the measurement intervals.

3. Method according to Claim 1 or 2, characterised in that the pressure variation ($\Delta p_1$, $\Delta p_2$) in a measurement interval is obtained by a balancing calculation from a plurality of pressure values measured in the time interval.

4. Method according to one of Claims 1 to 3, characterised in that the size of the separable pipe sections (A-D) is selected in such a way that the fluid volume contained therein is sufficiently small in relation to the resolution capacity of the pressure measurement and of the minimum recognisable leakage flow.

5. Method according to one of Claims 1 to 4, characterised in that the pressure variations are determined in each case in three immediately successive measurement intervals ($t_0/t_1$, $t_1/t_2$, $t_2/t_3$), the initial pressure level ($p_{a1}$) in the first and third measurement intervals ($t_0/t_1$, $t_2/t_3$) being equal and different from the initial pressure level ($p_{a2}$) in the middle measurement interval ($t_1/t_2$), in that from the pressure variations ($\Delta p_1$, $\Delta p_3$) in the first and third measurement intervals ($t_0/t_1$, $t_2/t_3$) a pressure variation ($\Delta p'_2$) for the period of the middle measurement interval ($t_1/t_2$) is obtained by approximation calculation, for example interpolation, and the pressure difference ($\Delta p$) is formed from the pressure variation ($\Delta p'_2$) thus obtained and the pressure variation ($\Delta p_2$) determined in the middle measurement interval ($t_1/t_2$).

6. Method according to one of Claims 1 to 5, characterised in that the preset value ($\Delta p_v$) is calculated from a permissible maximum leakage flow, from the maximum pressure and the fluid volume in the corresponding pipe section (A-D) and from the time duration (t) and the initial pressure level ($p_{a1}$, $p_{a2}$) of the measurement intervals taken for the pressure variation difference ($\Delta p$).

7. Method according to one of Claims 1 to 5, characterised in that the preset value ($\Delta p_v$) is set as approximately zero.

8. Method according to one of Claims 1 to 7, characterised in that the initial pressure level ($p_{a1}$, $p_{a2}$) of the measurement intervals is made smaller than 10 bar and its ratio in different measurement intervals is made approximately 1:3.

9. Method according to one of Claims 1 to 8, characterised in that the time-standardised pressure variation difference ($\Delta p$) is multiplied by the reciprocal of the difference from the root of the initial pressure level ($p_{a1}$, $p_{a2}$) and by a constant specific to the pipe or pipe network and the product is issued as the estimated leakage quantity flowing out at operating pressure of the pipe or pipe network in the reference time unit.

10. Method according to Claim 9, characterised in that the constant specific to the pipe or pipe network is determined as the product of a constant dependent upon the geometry and the material of the pipe or pipe network and the compressibility of the fluid, the fluid volume in the corresponding pipe section (A-D) and the root of the working pressure of the pipe or pipe network.

11. Method according to one of Claims 1 to 10, characterised in that the time-standardised pressure variation difference ($\Delta p$) is reduced by a correction factor proportional to the pressure difference ($p_{a1} - p_{a2}$) between the initial pressure levels ($p_{a1}$, $p_{a2}$), before application of the leakage test criterion or before leakage quantity estimation.

12. Method according to Claim 11, characterised in that the product of the difference of the initial pressure levels ($p_{a1}$, $p_{a2}$) and a constant is used as correction factor.

13. Method according to Claim 12, characterised in that the constant for each pipe section (A-D) is ascertained by measurements on the leak-free pipe section (A-D) in such a way that a plurality of pressure variation determinations is carried out with varied initial pressure levels ($p_{a1}$, $p_{a2}$) and the time-standardised pressure variation differences ($\Delta p$) are ascertained as function of the difference ($p_{a1} - p_{a2}$) of the initial pressure levels ($p_{a1}$, $p_{a2}$) in each case.

**Revendications**

1. Procédé de contrôle des fuites de canalisations ou réseaux de canalisations (10), dans lequel on met un fluide sous pression dans plusieurs tronçons de canalisations (A-D) distincts, qui peuvent être isolés les uns des autres, on règle la pression du fluide à un niveau de pression de départ et, pour chaque tronçon de canalisation, on mesure la variation de la pression en partant de ce niveau de pression initial, caractérisé en ce qu'on règle la pression du fluide sur au moins deux niveaux de pression de départ différents (Pa1, Pa2), en ce qu'on capte les variations de pression ($\Delta p1$, $\Delta p2$) aux différents niveaux de pression de départ (Pa1, Pa2), dans des intervalles de mesure successifs, on les rapporte à une unité de temps, c'est-à-dire qu'on les norme par rapport au temps, en ce que, à partir des variations de pression ($\Delta p1$, $\Delta p2$) normées par rapport au temps, on forme une différence de variations de pression ($\Delta p$) normée par rapport au temps et en ce qu'on vérifie si la différence de variation de pression normée par rapport au temps ($\Delta p$) est supérieure à une valeur de consigne (pv) rapportée à la même unité de temps, c'est-à-dire normée par rapport au temps.

2. Procédé selon la revendication 1, caractérisé en ce qu'on capte les variations de pression ($\Delta p1$, $\Delta p2$) dans des intervalles de mesure de même durée et que l'on choisit pour l'unité de temps de référence de la valeur de consigne ($\Delta pv$), une valeur égale à la durée (t) des intervalles de mesure.

3. Procédé selon l'une des revendications 1 ou 2, caractérisé en ce qu'on tire la variation de pression ($\Delta p1$, $\Delta p2$) qui se produit dans un intervalle par un calcul de compensation à partir de plusieurs valeurs de pression mesurées dans l'intervalle de mesure.

4. Procédé selon l'une des revendications 1 à 3, caractérisé en ce qu'on choisit la dimension des tronçons de canalisations (A-D) póuvant être isolés de telle manière que le volume de fluide enfermé dans ces segments soit suffisamment petit relativement au pouvoir de résolution de la mesure de la pression et au débit de fuite minimum à détecter.

5. Procédé selon l'une des revendications 1 à 4, caractérisé en ce qu'on détermine les variations de pression dans trois intervalles de mesure qui se succèdent directement ($t_0/t_1$, $t_1/t_2$, $t_2/t_3$), le niveau de pression de départ (Pa1) étant le même dans le premier et le troisième intervalle de mesure ($t_0/t_1$, $t_2/t_3$) et étant différent du niveau de pression de départ (pa2) utilisé dans l'intervalle de mesure central ($t_1$, $t_2$), en ce qu'à partir des variations de pression ($\Delta p1$, $\Delta p3$) observées dans le premier et le troisième intervalle de mesure ($t_0/t_1$, $t_2/t_3$), on tire, par un calcul approché, par exemple par interpolation, une variation de pression ($\Delta p2'$) correspondant au temps de l'intervalle de mesure central ($t_1/t_2$) et, à partir de la variation de pression ($\Delta p2'$) ainsi obtenue et de la variation de pression (p2) obtenue dans l'intervalle de mesure central ($t_1/t_2$), on établit la différence de variation de pression ($\Delta p$).

6. Procédé selon l'une des revendications 1 à 5, caractérisé en ce qu'on calcule la valeur de consigne ($\Delta pv$) à partir d'un débit de fuite maximum admissible, de la pression maximum et du volume de fluide contenu dans le tronçon de canalisation correspondant (A-D), et, à partir de la durée (t) et des niveaux de pression de départ (Pa1, Pa2) de l'intervalle de mesure utilisé pour la différence de variation de pression ($\Delta p$).

7. Procédé selon l'une des revendications 1 à 5, caractérisé en ce qu'on prend pour la valeur de consigne ($\Delta pv$) une valeur proche de zéro.

8. Procédé selon l'une des revendications 1 à 7, caractérisé en ce qu'on choisit, pour les niveaux de pression de départ (pa1, pa2), des intervalles de mesure d'une valeur inférieure à 10 bar et en ce qu'on choisit, pour le rapport de ces niveaux utilisés dans les différents intervalles de mesure, la valeur d'environ 1:3.

9. Procédé selon l'une des revendications 1 à 8, caractérisé en ce qu'on multiplie la différence de variation de pression normée par rapport au temps ($\Delta p$) par l'inverse de la différence des racines carrées des niveaux de pression (Pa1, Pa2) et par une constante particulière à la canalisation ou au réseau de canalisations et on utilise le produit ainsi obtenu comme indication de la quantité de fuite évaluée s'échappant dans l'unité de temps de référence à la pression de service de la canalisation ou du réseau de canalisations.

10. Procédé selon la revendication 9, caractérisé en ce que la constante particulière à la canalisation ou au réseau de canalisations est déterminée par le produit d'une constante qui est fonction de la géométrie et de la matière constitutive de la canalisation ou du réseau de canalisations et de la compressibilité du fluide, du volume de fluide contenu dans le tronçon de canalisation correspondant (A-D) et de la racine carrée de la pression de service de la canalisation ou du réseau de canalisations.

11. Procédé selon l'une des revendications 1 à 10, caractérisé en ce que, avant l'utilisation du critère de contrôle de fuite ou avant l'évaluation de la quantité de fuite, on réduit la différence de variation de pression normée par rapport au temps ($\Delta p$) en la divisant par un coefficient de correction proportionnel à la différence de pression (pa1 − pa2) entre les niveaux de pression de départ (pa1, pa2).

12. Procédé selon la revendication 11, caractérisé en ce qu'on utilise comme coefficient de correction le produit de la différence des niveaux de pression de départ (pa1, pa2) par une constante.

13. Procédé selon la revendication 12, caractérisé en ce que ladite constante est calculée pour chaque tronçon de cànalisation (A à D) par des mesures effectuées sur le tronçon de canalisation (A à D) dépourvu de fuites, en effectuant une pluralité de mesures de variation de pression à différents niveaux de pression de départ (pa1, pa2) et en calculant les différences de variation de pression normées par rapport au temps ($\Delta p$) en fonction des valeurs de la différence (pa1 − pa2) des différents niveaux de pression de départ (pa1, pa2).

Fig.1

$$\Delta p_2' = \frac{1}{2}(\Delta p_3 + \Delta p_1)$$
$$\Delta p = \Delta p_2' - \Delta p_2$$

Fig.2